# DEMANDE DE BREVET EUROPEEN

(11) **EP 4 325 430 A1**
(43) Date de publication de la demande: **21.02.2024**
(21) Numéro de dépôt: 22191165.4
(22) Date de dépôt: 19.08.2022
(51) Int. Cl.: G06T 7/00, G06T 7/70

(54) **PROCÉDÉ D'ALIMENTATION DE PIÈCES ORIENTÉES**

(71) Demandeur: Aisapack Holding SA, 1896 Vouvry (CH)
(72) Inventeur: MATHIEU, Stéphane, 74500 Publier (FR)
(74) Mandataire: Grosfillier, Philippe

(57) **Abrégé**

Le procédé d'alimentation d'objets, comme des bouchons ou des têtes de tubes, comprend au moins un contrôle d'orientation et de qualité intégré dans le procédé d'alimentation effectué en cours de production et en continu, le contrôle d'orientation et de qualité comprenant une phase d'apprentissage et une phase de production.

## Description

### Domaine de l'invention

L'invention se situe dans le domaine des objets fabriqués en série et nécessitant des systèmes d'alimentation ou de distribution à grande cadence, tels que des bols vibrants ou des bols centrifuges. L'invention concerne plus particulièrement un procédé et dispositif d'alimentation utilisant un contrôle visuel et des algorithmes d'intelligence artificielle pour délivrer les objets orientés à grande cadence de production.

### Etat de la technique

Des systèmes d'alimentation à grande cadence qui oriente les objets sont connus dans l'état de la technique. Des exemples sont donnés dans les publications suivantes : US5311977, US4608646, DE3312983, US4692881 et US5853078.

La publication US5311977 décrit un système d'alimentation d'objets permettant de déterminer l'orientation de l'objet par inspection géométrique et de réorienter ou rejeter l'objet à l'aide du signal de sortie d'un microprocesseur. Selon cette publication, l'inspection géométrique est réalisée par un détecteur d'objets possédant au moins 1000 pixels disposés linéairement, qui sont orientés de manière à être éclairés ou obscurcis en fonction de la géométrie de l'objet. Le système décrit dans cette publication comprend des moyens permettant de détecter les points de contour de l'objet se trouvant dans une tranche de balayage et comparer en temps réel la position des points de contour avec un profil mémorisé. In fine, le système permet d'orienter l'objet ou le rejeter en réponse au signal de sortie du microprocesseur sur la base des signaux de point de contour venant de plusieurs tranches de balayage.

La publication US4608646 décrit un système à microcontrôleur pour reconnaître et identifier des objets identiques ou différents transférés le long de la piste d'un alimentateur d'objets, tel qu'un alimentateur à bol, ainsi que pour vérifier l'orientation des objets et trier les objets orientés dans une séquence répétitive prédéterminée. La reconnaissance et le séquençage des objets sont programmables à la demande de l'utilisateur. La reconnaissance des objets comprend un dispositif de reconnaissance de la silhouette des objets, composé d'un ensemble de capteurs de lumière couplés à une grille perforée située dans la piste d'alimentation. L'image de la silhouette de chaque objet à trier est d'abord numérisée et stockée dans la mémoire du microcontrôleur dans une position associée à un numéro d'identification de l'objet. De même, la séquence des différents objets est stockée dans la mémoire du micro-contrôleur. Par la suite, lorsque les objets sont amenés sur la grille, chaque objet est comparé à une image stockée correspondante dans la position correcte de la séquence, les objets incorrects ou mal orientés étant rejetés par un jet d'air dirigé sur la piste d'alimentation, tandis qu'une reconnaissance correcte de l'objet entraînera l'arrêt du jet d'air, permettant à l'objet de passer et d'être délivré à une station de sortie de l'alimentation.

La publication DE3312983 décrit un bol vibrant pour trier des composants mécaniques en utilisant la position et le contour des composants comme critère de décision. L'appareil comprend un dispositif de transport pour transporter les composants essentiellement perpendiculairement à l'étendue d'une ligne de capteurs électroniques au moyen de laquelle leurs contours peuvent être explorés ligne par ligne, et par un comparateur électronique dans lequel les signaux de sortie de la ligne de capteurs peuvent être transmis et au moyen duquel ils peuvent être comparés à des valeurs de consigne préalablement mémorisées.

La publication US4692881 décrit un dispositif d'alimentation d'objets dans une orientation prédéfinie. Le dispositif comporte un détecteur composé d'une pluralité d'éléments récepteurs de lumière disposés en une ligne singulière ou en plusieurs lignes s'étendant dans une direction perpendiculaire à une direction d'alimentation des objets, et au moins un élément émetteur de lumière espacé des éléments récepteurs de lumière et faisant face à ceux-ci. Le dispositif comporte également une RAM pour mémoriser un modèle de signal de référence obtenu en détectant successivement la forme d'objets lorsqu'ils passent devant le détecteur dans la position souhaitée présélectionnée. Le dispositive comporte également une unité centrale de traitement (CPU) pour comparer le modèle de signal de référence avec le modèle de données de signal obtenu lorsque les objets à discriminer passent successivement devant ledit détecteur dans des positions arbitraires. In fine, en réponse à chaque comparaison défavorable, les objets mal orientés sont rejetés dans le bol.

La publication US5853078 décrit un appareil d'orientation et d'alimentation d'objets qui est particulièrement adapté à une utilisation dans un système d'assemblage automatisé. Cet appareil comporte un bol d'alimentation qui comprend une piste interne hélicoïdale se terminant au niveau du bord supérieur du bol adjacent à un anneau d'alimentation annulaire monté pour un mouvement de rotation sélectif autour du bol d'alimentation. Un circuit de commande comprenant une caméra fixe positionnée au-dessus de l'anneau d'alimentation annulaire agit pour commander le mouvement de rotation de l'anneau d'alimentation annulaire par un moteur connecté de manière opérationnelle afin d'amener des parties successives de l'anneau d'alimentation annulaire dans un champ de vision prédéterminé de la caméra afin que les objets correctement orientés puissent être différenciés des objets incorrectement orientés et qu'un signal soit ensuite fourni à un robot de prélèvement et de placement pour retirer les objets correctement orientés. Une barre de balayage est positionnée à un endroit sélectionné pour pousser les objets incorrectement orientés hors de l'anneau d'alimentation annulaire et les ramener dans le bol d'alimentation pour le recyclage. Une autre forme de réalisation de la cuve d'alimentation vibrante est également fournie, qui utilise un second disque à rotation sélective en relation concentrique et espacée avec l'anneau d'alimentation pour recevoir les objets récupérés retirés de l'anneau d'alimentation annulaire dans des réceptacles prévus sur l'anneau.

### Objectif, contraintes et problèmes à résoudre

La présente invention a pour but de diminuer le temps de réglage des systèmes d'alimentation à grande cadence d'objets orientés tels que les bols vibrants ou les bols centrifuges. Malgré les améliorations proposées dans l'art antérieur et décrits notamment dans les publications US5311977, US4608646, DE3312983, US4692881 et US5853078, ces systèmes ne permettent pas un changement rapide d'objet, ce qui entraine des pertes de temps importante pour effectuer les réglages à chaque changement d'objet. Pour remédier à cette difficulté, les bols vibrants ou gravitationnels sont souvent dédiés à une géométrie unique d'objet car le temps de changement de bol vibrant sur les machines d'assemblage est plus court que le temps de réglage du bol pour distribuer le nouvel objet à la cadence désirée. Cette situation présente l'inconvénient de l'investissement et du stockage d'un grand nombre de bols de distribution d'objets qui sont individuellement adaptés à un seul objet ou à un nombre limité d'objets.

Un autre inconvénient des dispositifs décrits dans l'art antérieur est lié aux objets défectueux qui ne sont pas détectés. Un objet défectueux est par exemple un objet hors tolérance ou déformé, ou encore un produit dont l'esthétique (par exemple son aspect) est inadaptée. Ces objets provoquent des arrêts intempestifs des machines d'assemblage ou conduisent à des produits assemblés défectueux.

La présente invention permet de remédier aux inconvénients précités grâce à un bol muni d'un système de vision associé à des algorithmes d'intelligence artificielle et à d'éventuels moyens d'orientation. L'invention permet également de définir des critères de rejet de pièces dites défectueuses. Les critères de rejet peuvent être liés aux dimensions de l'objet, comme par exemple des cotes en dehors de tolérances ou des objets déformés, ou être liés à des défauts d'ordre esthétique ou d'aspect (comme par exemple rayure, tache, corps étranger, teinte inadaptée, etc.).

Selon la présente invention, des algorithmes d'intelligence artificielle associés à un système de vision permettent le changement rapide d'objets dans un bol de d'alimentation à grande cadence d'objets orientés. L'invention permet également le rejet des objets défectueux, ce qui évite les arrêts de la machine d'assemblage lorsque les objets sont hors tolérance ou déformés ; et ce qui évite également l'utilisation d'objets dont l'esthétique ou l'aspect est inadapté.

Selon la présente invention, une phase d'apprentissage permet de définir une "norme" de ce qui est acceptable pour des objetsalimentés. Cette « norme » définit une plage d'orientation de l'objet ; éventuellement une plage dimensionnelle et une plage d'esthétique acceptables. Dans l'invention, la notion de "défaut acceptable ou non-acceptable", c'est-à-dire d'objet considéré comme "bon" ou "défectueux" se définit par rapport à un certain niveau d'écart par rapport à la norme prédéfinie lors de l'apprentissage.

L'invention permet de garantir un niveau d'orientation et de qualité des objets constant dans le temps. De plus, on peut réutiliser des recettes, c'est-à-dire des normes qui ont déjà établies antérieurement, pour des productions ultérieures du même objet.

Le niveau d'orientation et de qualité des objets peut être ajusté dans le temps en fonction des différences observées par un apprentissage itératif : lors de la production, la norme définie par l'apprentissage initial est affinée par un apprentissage "supplémentaire" qui tient compte des objets alimentés dans la phase de production normale mais qui présentent une orientation ou des défauts considérés comme acceptables. En conséquence, il est nécessaire d'adapter la norme afin qu'elle intègre cette information et que le processus ne rejette pas ces objets.

L'invention permet de distribuer les objets dans un temps très réduit et pour obtenir ces performances, elle fait appel à un modèle de compression-décompression d'images des objets comme décrit en détail dans la présente demande.

Dans le cadre de la présente invention, les contraintes posées et les problèmes à résoudre sont notamment les suivants:
- Le contrôle visuel se fait pendant le mouvement de l'objet dans le bol, le temps de contrôle est par conséquent réduit car il ne doit pas ralentir la cadence de production, ou au maximum avoir un faible impact sur celle-ci
- La plage d'acceptation de l'objet orienté doit être ajustable.
- Les défauts dimensionnels et esthétiques ne sont pas connus (pas de bibliothèque de défaut)
- Les défauts esthétiques varient en fonction du décor
- Le niveau d'acceptation des défauts doit être ajustable.
- Un objet considéré comme mal orienté est un objet dont l'orientation est en dehors des tolérances d'orientation considérées comme acceptables
- Un objet considéré comme défectueux est un objet dont les défauts sont en dehors des tolérances considérées comme acceptables.

La méthode proposée dans l'invention décrite ci-dessous permet de palier les inconvénients précités et surmonter les problèmes identifiés.

### Définitions

- Objet: objet en cours de d'alimentation (ou de distribution) dans un bol, comme par exemple un bouchon ou une tête de tube
- N: nombre d'objets formant un lot de la phase d'apprentissage. N correspond aussi au nombre d'images secondaires formant un lot
- Image primaire : image prise de l'objet ou d'une partie de l'objet
- K: nombre d'images primaires par objet
- Aₖ: image primaire d'indice k avec 1≤ k ≤K
- Image secondaire : partie de l'image primaire
- Pₖ: nombre d'image secondaire par image primaire AₖS_{k,p} : Image secondaire d'indice k associée à l'image primaire Aₖ et d'indice p avec 1≤ p ≤Pₖ
- Modèle F_{k,p} : modèle de compression - décompression associé à l'image secondaire S_{k,p}
- Facteur de compression Q_{k,p}: facteur de compression du modèle F_{k,p}
- Image secondaire reconstruite R_{k,p}: Image secondaire reconstruite de l'image secondaire S_{k,p} avec le modèle F_{k,p} associé.

### Exposé général de l'invention

L'invention porte sur un procédé d'alimentation en objets orientés, comme par exemple des composants d'emballages tels que des têtes de tubes ou des bouchons, comportant un contrôle visuel intégré à une ou plusieurs étapes du procédé de distribution desdits objets. Le procédé d'alimentation selon l'invention comprend aux moins deux phases pour réaliser le contrôle visuel:
- Une phase d'apprentissage pendant laquelle un lot d'objets jugés "bien orientés" et "de bonne qualité" sont alimentés et à l'issue de laquelle des critères sont définis à partir des images desdits objets.
- Une phase de production pendant laquelle l'image des objets en cours de production et les critères définis pendant la phase d'apprentissage sont utilisés pour quantifier en temps réel l'orientation et la qualité des objets en cours d'alimentation et pour piloter le procédé d'alimentation.

Pendant la phase d'apprentissage, la machine fournit une alimentation d'un nombre N d'objets jugés d'orientation et de qualité acceptable. Une (K=1) ou plusieurs images distinctes (K>1) dite(s) image(s) primaire(s) de chaque objet est(sont) collectée(s) au cours du procédé de d'alimentation desdits objets. Les KxN images primaires collectées subissent un traitement numérique qui sera décrit plus en détail ci-dessous, et qui comprend au moins les étapes suivantes :
- Repositionnement de chaque image primaire Aₖ
- Division de chaque image primaire Ak en Pk images secondaires notées S_{k,p} avec 1≤ k ≤K et 1≤ p ≤ Pₖ
- Regroupement des images secondaires en lots de N images similaires.
- Pour chaque lot d'image secondaire S_{k,p} :
   ∘ Recherche d'une représentation compressée F_{k,p} de facteur de compression Q_{k,p},
   ∘ A partir de chaque lot d'image secondaire, on en déduit ainsi un modèle F_{k,p} de compression - décompression avec un facteur de compression Q_{k,p}. Un cas particulier de l'invention consiste à avoir le même facteur de compression pour tous les modèles F_{k,p}. L'ajustement du taux de compression Q_{k,p} à chaque modèle F_{k,p} permet d'ajuster le niveau de détection des défauts et d'optimiser le temps de calcul en fonction de la zone observée de l'objet.

A la fin de la phase d'apprentissage, on dispose donc d'un modèle F_{k,p} et d'un facteur de compression Q_{k,p} par zone observée de l'objet; chaque zone étant définie par une image secondaire S_{k,p}.

Comme il sera expliqué plus en détail ci-après, chaque image secondaire de l'objet a ses propres dimensions. Un cas particulier de l'invention consiste à avoir toutes les images secondaires de taille identique. Dans certains cas, il est avantageux de pouvoir diminuer localement la taille des images secondaires afin de détecter défauts de plus petite dimension. En ajustant conjointement la taille de chaque image secondaire S_{k,p} et du facteur de compression Q_{k,p}, l'invention permet d'optimiser le temps de calcul tout en gardant un niveau de détection performant et ajusté au niveau d'exigence liée au produit fabriqué. L'invention permet d'adapter localement le niveau de détection au niveau de criticité de la zone observée.

Pendant la phase de production, K images dites "primaires" de chaque objet sont utilisées pour contrôler en temps réel l'orientation et la qualité de l'objet en cours de production, ce qui permet :
- de recycler dans le système d'alimentation les objets mal orientés ou d'orienter correctement lesdits objets mal orientés,
- de retirer au plus tôt de la production les objets défectueux.

Pour réaliser le contrôle en temps réel de l'objet en cours de production, les K images primaires dudit objet sont évaluées via une méthode décrite dans la présente demande par rapport au groupe d'images primaires acquises pendant la phase d'apprentissage dont on extrait des fonctions de compression - décompression et des facteurs de compression qui sont appliqués à l'image dudit objet en cours de production. Cette comparaison entre des images acquises pendant la phase de production et des images acquises pendant la phase d'apprentissage donne lieu à la détermination d'un ou plusieurs scores par objet, dont les valeurs permettent de classer les objets par rapport à des seuils correspondant à des niveaux d'orientation et des niveaux de qualité visuels. Grâce à la valeur des scores et aux seuils prédéfinis, les objets mal orientés sont soit recyclés dans le bol soit réorientés ; et les objets défectueux peuvent être écartés du procédé de production. D'autres seuils peuvent être utilisés pour détecter les lots d'objet défectueux (taux de rejet trop important), et permettre un changement de lot d'objet afin de ne pas péjorer la cadence d'alimentation en objets orientés.

Une partie de l'invention réside dans le calcul des scores qui permet grâce à plusieurs valeurs numériques de quantifier l'orientation et la qualité visuelle des objets en production. Le calcul des scores de chaque objet en production requiert les opérations suivantes :
- Acquisition des images primaires Akde l'objet en production
- Repositionnement de chaque image primaire par rapport à l'image de référence respective
- Division des K images primaires en images secondaires S_{k,p} en utilisant la même décomposition que celle réalisée pendant la phase d'apprentissage.
- Calcul de l'image reconstruite R_{k,p} de chaque image secondaire S_{k,p} en utilisant le modèle F_{k,p} et le facteur Q_{k,p} définis pendant la phase d'apprentissage
- Calcul de l'erreur de reconstruction de chaque image secondaire en comparant l'image secondaire S_{k,p} et l'image secondaire reconstruite R_{k,p}. Avec l'ensemble des images secondaires de l'objet, on obtient donc l'ensemble des erreurs de reconstruction.
- Les scores de l'objet sont calculés à partir des erreurs de reconstruction

L'utilisation du modèle numérique F_{k,p} à facteur de compression Q_{k,p} permet de réduire fortement le temps de calcul et permet, in fine, de contrôler l'orientation et la qualité de l'objet au cours du procédé d'orientation et d'alimentation et piloter le procédé. La méthode est particulièrement adaptée aux procédés de d'alimentation d'objets orientés à grande cadence de production.

L'invention est avantageusement utilisée dans le domaine de l'emballage pour fournir une alimentation par exemple en composants d'emballages comme des tête de tube ou des bouchons. L'invention est particulièrement avantageuse pour alimenter à grande cadence des têtes de tube et de bouchons sur des machines de fabrication de tubes pour produits dits "oral care" ou cosmétiques. L'invention est particulièrement avantageuse pour une alimentation en bouchons sur des bouchonneuses.

L'invention peut être utilisée dans de nombreux procédés d'assemblage comme par exemple par soudage, par collage, par clipsage par vissage. C'est le cas par exemple du procédé de fabrication de tubes d'emballage dans lequel des composants injectés (épaule ou tête de tube et bouchon) sont assemblés à grande cadence par soudage, clipsage ou vissage afin de former le tube. Il est d'un grand avantage de contrôler en continu l'orientation et l'esthétique des composants alimentés sur la machine d'assemblage. Cela permet d'améliorer l'efficience et éviter les produits défectueux.

L'invention cible principalement les procédés d'assemblage dans des lignes de production automatisées. L'invention est particulièrement adaptée à la fabrication d'objets à grand cadence de production comme les objets produits dans le secteur de l'emballage ou tout autre secteur ayant des cadences de production élevées.

Selon l'invention, l'orientation acceptable est définie automatiquement à partir de la phase d'apprentissage. Une bibliothèque de défaut n'est pas nécessaire, la phase d'apprentissage permettant de définir les objets acceptables au niveau de leur orientation, de leurs dimensions et de leur esthétique. Une orientation inadéquate et les éventuels défauts sont détectés automatiquement pendant la production une fois que la procédure d'apprentissage a été exécutée.

Dans des modes d'exécution, l'invention concerne un procédé d'alimentation au moyen d'un bol d'alimentation, comme un bol vibrant ou centrifuge, d'objets orientés, comme par exemple des composants d'emballage tels que des têtes de tubes ou des bouchons, ledit procédé comprenant au moins un contrôle d'orientation et de qualité intégré dans le procédé d'alimentation effectué en cours de production et en continu, ledit contrôle étant basé sur des images des objets prises en cours d'alimentation et utilisant des algorithmes d'intelligence artificielle, ledit contrôle comprenant une phase d'apprentissage permettant de définir des tolérances acceptables d'orientation et de qualité des objets, et une phase de production pendant laquelle seuls les objets dont l'orientation et la qualité respectent lesdites tolérances acceptables sont alimentés.

Dans des modes d'exécution, la phase d'apprentissage peut comprendre au moins les étapes suivantes:
- ) production de N objets considérés comme ayant une orientation et une qualité acceptables (à savoir respectant les tolérances considérées comme acceptables) ;
- ) prise d'au moins une image primaire (Aₖ) de référence de chacun des N objets;
- ) repositionnement de chaque image primaire (Ak) de référence
- ) division de chaque image primaire (Aₖ) de référence en (Pₖ) images secondaires (S_{k,p}) de référence;
- ) regroupement des images secondaires de référence correspondantes en lots de N images;
- ) détermination d'un modèle (F_{k,p}) de compression - décompression et avec un facteur de compression (Q_{k,p}) par lot.

Dans des modes d'exécution, la phase de production peut comprendre au moins les étapes suivantes:
- ) prise d'au moins une image primaire d'au moins un objet en production;
- ) division de chaque image primaire en images secondaires (S_{k,p});
- ) application du modèle de compression - décompression et du facteur de compression définis lors de la phase d'apprentissage à chaque image secondaire (S_{k,p}) pour former une image secondaire reconstruite (R_{k,p});
- ) calcul de l'erreur de reconstruction de chaque image secondaire reconstruite R_{k,p};
- ) attribution d'un ou plusieurs scores par objet sur la base des erreurs de reconstruction ;
- ) calcul éventuel de l'indice d'orientation
- ) détermination si l'objet en cours d'alimentation passe avec succès ou non le contrôle de son orientation et de sa qualité sur la base des scores attribués.

Dans des modes d'exécution, si l'orientation de l'objet n'est pas dans les tolérances acceptables, l'objet peut être orienté pour entrer dans les tolérances acceptables ou recyclé dans un bol de distribution pour une distribution ultérieure.

Dans des modes d'exécution, si la qualité de l'objet n'est pas dans les tolérances acceptables, l'objet peut être écarté du lot de production. Il peut être jeté ou son défaut peut éventuellement être corrigé de manière à supprimer le défaut constaté (ou pour entrer dans les tolérances acceptables) et être réintroduit dans un lot de production.

Dans des modes d'exécution, après l'étape de prise d'au moins une image primaire (dans la phase d'apprentissage et/ou de production), chaque image primaire peut être repositionnée.

Dans des modes d'exécution, chaque image primaire peut être traitée par exemple numériquement. Le traitement peut par exemple faire appel à un filtre numérique (comme le flou gaussien) et/ou la détection de contours ("edge détection"), et/ou l'application de masques pour cacher certaines zones de l'image comme par exemple l'arrière-plan ou des zones sans intérêt.

Dans un autre mode modes d'exécution, on peut exécuter une analyse multiple sur une ou plusieurs images primaires. L'analyse multiple consiste à appliquer sur la même image primaire plusieurs traitements simultanément. Ainsi une image primaire « mère » pourra donner lieu à plusieurs image images primaires « filles » en fonction du nombre d'analyse exécutées. Par exemple, une image primaire « mère » peut faire l'objet d'un premier traitement avec un filtre gaussien donnant lieu à une première image primaire « fille », et d'un second traitement avec un filtre Sobel donnant lieu à une seconde image primaire « fille ». Les deux images primaires « filles » subissent le même traitement numérique défini dans l'invention. Ainsi à chaque image primaire « fille » pourra être associé un ou plusieurs scores.

L'analyse multiple est intéressante lorsque des caractéristiques très différentes sont recherchés sur les objets. Ainsi l'analyse multiple permet d'adapter l'analyse à la caractéristique recherchée. Cette méthode permet une finesse de détection plus élevé pour chaque type de caractéristique. Les caractéristiques peuvent être utilisés pour déterminer l'indice d'orientation de l'objet ou détecter d'éventuels défauts.

Dans des modes d'exécution, le facteur de compression peut être compris entre 5 et 500'000, de préférence entre 100 et 10'000.

Dans des modes d'exécution, la fonction de compression - décompression peut être déterminée à partir d'une analyse en composantes principales ("PCA").

Dans des modes d'exécution, la fonction de compression - décompression peut être déterminée par un auto-encodeur.

Dans des modes d'exécution, la fonction de compression - décompression peut être déterminée par l'algorithme dit "OMP" (Orthogonal Matching pursuit).

Dans des modes d'exécution, l'erreur de reconstruction peut être calculée par la distance euclidienne et/ou la distance de Minkovsky et/ou la méthode de Tchebichev.

Dans des modes d'exécution, le score peut correspondre à la valeur maximale des erreurs de reconstruction et/ou à la moyenne des erreurs de reconstruction et/ou à la moyenne pondérée des erreurs de reconstruction et/ou à la distance euclidienne et/ou la p-distance et/ou la distance de Tchebichev.

Dans des modes d'exécution, N peut être égal à au moins 10.

Dans des modes d'exécution, on peut prendre au moins deux images primaires, les images primaires étant de taille identique ou de taille différente.

Dans des modes d'exécution, la division de chaque image primaire peut se faire en P images secondaires de taille identique ou de taille différente.

Dans des modes d'exécution, les images secondaires S peuvent être juxtaposées avec recouvrement ou sans recouvrement.

Dans des modes d'exécution, certaines images secondaires peuvent être juxtaposées avec recouvrement et d'autres images secondaires sont juxtaposées sans recouvrement.

Dans des modes d'exécution, les images secondaires peuvent être de taille identique ou de taille différente.

Dans des modes d'exécution, le contrôle de l'orientation et de la qualité intégré peut être effectué au moins une fois dans le procédé d'alimentation.

Dans des modes d'exécution, la phase d'apprentissage peut être itérative et répétée en cours de production avec des objets en cours d'alimentation afin de tenir compte d'une différence qui n'est pas considérée comme une mauvaise orientation ou comme un défaut.

Dans des modes d'exécution, le repositionnement peut consister à considérer un nombre prédéterminé de points d'intérêt et de descripteurs répartis sur l'image et à déterminer le déplacement relatif entre l'image de référence et l'image primaire qui minimise l'erreur de superposition au niveau des points d'intérêt.

Dans des modes d'exécution, les points d'intérêt peuvent être répartis de manière aléatoire dans l'image ou dans une zone prédéfinie de l'image dans une zone prédéfinie de l'image.

Dans des modes d'exécution, la position des points d'intérêt peut être prédéfinie, arbitrairement ou non.

Dans des modes d'exécution, les points d'intérêt peuvent détectés par l'une des méthodes dites "SIFT", ou "SURF", ou "FAST", ou "ORB" ; et les descripteurs définis par l'une des méthodes "SIFT", ou "SURF", ou "BRIEF", ou "ORB".

Dans des modes d'exécution, l'image peut être repositionnée selon au moins un axe et/ou l'image est repositionnée en rotation autour de l'axe perpendiculaire au plan formé par l'image et/ou l'image est repositionnée par la combinaison d'un mouvement de translation et de rotation.

Dans des modes d'exécution, la valeur du score peut être utilisée pour discriminer un objet considéré comme mal orienté d'un objet considéré comme défectueux.

Dans des modes d'exécution, plusieurs scores peuvent être utilisés pour discriminer un objet considéré comme mal orienté d'un objet considéré comme défectueux.

Dans des modes d'exécution, le repositionnement des images et au moins un score peuvent être utilisés pour discriminer un objet considéré comme mal orienté d'un objet considéré comme défectueux.

Dans des modes d'exécution, les points d'intérêt et les descripteurs et au moins un score peuvent être utilisés pour discriminer un objet considéré comme mal orienté d'un objet considéré comme défectueux.

Dans des modes d'exécution, l'objet considéré comme mal orienté peut être recyclé dans le système de d'alimentation.

Dans des modes d'exécution, l'objet considéré comme mal orienté peut être orienté correctement avant ou après sa sortie du système d'alimentation. Le système d'orientation est par exemple un robot ou un autre moyen équivalent.

Dans des modes d'exécution, l'objet considéré comme défectueux peut être écarté du lot de production. Par exemple, l'écartement du lot de production peut être réalisé par un jet d'air qui écarte l'objet du flux de production et l'éjecte dans un bac de rebuts. Cet objet peut être "corrigé" par suppression de son défaut permettant son introduction dans un lot de production ou simplement jeté.

### Exposition détaillée de l'invention

Les figures 1 à 7 sont utilisées pour illustrer l'invention.
- La figure 1 est un exemple d'objet en cours d'alimentation dans le bol
- La figure 2 montre les images primaires prises pendant la phase d'apprentissage
- La figure 3 illustre le découpage des images primaires en images secondaires
- La figure 4 représente la phase d'apprentissage, et en particulier la formation de lots d'images secondaires pour obtenir in fine un modèle de compression-décompression par lot
- La figure 5 illustre l'utilisation du modèle de compression-décompression en phase de production
- La figure 6 décrit sous forme de schéma bloc les principales étapes de la phase d'apprentissage
- La figure 7 décrit sous forme de schéma bloc les principales étapes de la phase de production

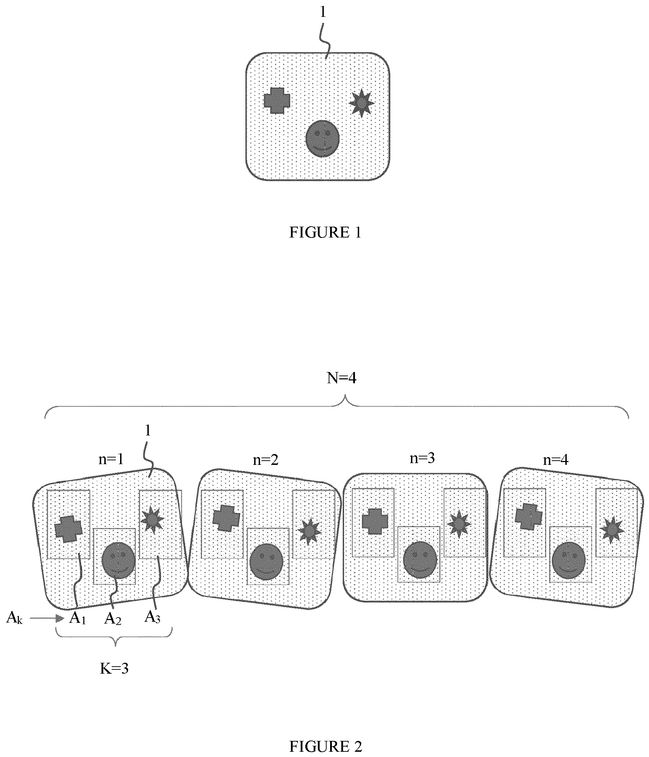

La figure 1 illustre un objet 1 en cours d'alimentation dans un bol à grande cadence. Afin d'illustrer l'invention et faciliter la compréhension de l'invention, trois motifs décoratifs ont été représentés sur l'objet comme exemple non-limitatif. L'invention permet le contrôle de l'orientation de l'objet et le contrôle de la qualité de ces motifs sur les objets en cours d'alimentation. L'invention permet de distribuer et contrôler des objets orientés à grande cadence de production. L'invention permet un changement rapide de l'objet destiné à être alimenté avec un temps de réglage réduit. Les objets peuvent être considérés comme des pièces unitaires selon l'exemple présenté figure 1. Les objets peuvent être par exemple en matière plastique, en métal, en bois, en verre ou à base de toute autre matière ou à base d'une combinaison de ces matières.

La figure 2 illustre un exemple d'images primaires de l'objet prises pendant la phase d'apprentissage. Pendant cette phase d'apprentissage, N objets jugés bien orientés et de qualité acceptable sont fournis par le bol. Pour faciliter l'illustration de l'invention, seuls 4 objets ont été représentés figure 2 à titre d'exemple. Pour obtenir un modèle robuste, le nombre d'objet nécessaire pendant la phase d'apprentissage est supérieur à 10 (soit N>10) et de préférence supérieur à 50 (soit N>50). Bien entendu, ces valeurs sont des exemples non-limitatifs et N peut être inférieur ou égal à 10. La figure 2 montre les 3 images primaires A₁, A₂ et A₃ représentant respectivement des motifs distincts imprimés sur l'objet. Dans l'exposé de l'invention, on désigne par Ak les images primaires de l'objet, l'indice k de l'image variant entre 1 et K; et K correspondant au nombre d'image par objet.

Comme il est illustré en figure 2, la taille des images primaires Aₖ n'est pas forcément identique. Sur la figure 2, l'image primaire A₂ est de plus petite dimension que les images primaires A₁ et A₃. Cela permet par exemple d'avoir une image A₂ avec une meilleure définition (plus grand nombre de pixel). Les images primaires peuvent couvrir toute la surface de l'objet 1 ou au contraire ne couvrir que partiellement sa surface.

Comme illustré figure 2, les images primaires Aₖ ciblent des zones particulières de l'objet. Cette flexibilité de l'invention tant au niveau de la taille, que de la position et du nombre d'images primaires permet d'optimiser le temps de calcul tout en conservant une grande précision de contrôle de la qualité visuelle dans les zones les plus critiques.

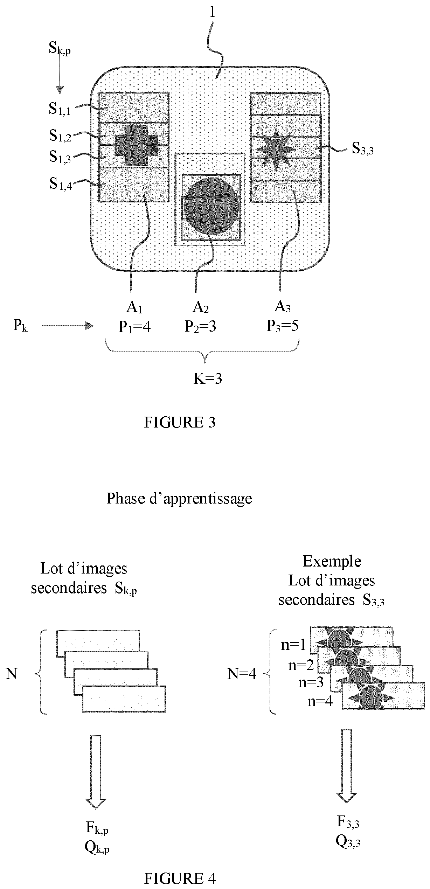

La figure 3 montre le découpage des images primaires en images secondaires. Ainsi, comme l'illustre la figure 3, l'image primaire A₁ est découpée en 4 images secondaires S_{1,1}, S_{1,2}, S_{1,3} et S_{1,4}. Ainsi chaque image primaire Ak est décomposée en Pₖ images secondaires S_{k,p} avec l'indice de découpage p qui varie entre 1 et Pₖ.

Comme il est illustré en figure 3, la taille des images secondaires n'est pas forcément identique. A titre d'exemple, la figure 3 montre que les images secondaires S_{1,2} et S_{1,3} sont de plus petite dimension que les images secondaires S_{1,1} et S_{1,4}. Cela permet d'avoir une recherche de défaut plus précise dans les images secondaires S_{1,2} et S_{1,3}.

Comme le montre également la figure 3, les images secondaires ne couvrent pas forcément l'ensemble de l'image primaire Ak. A titre d'exemple, les images secondaires S_{2,p} ne couvrent que partiellement l'image primaire A₂. En réduisant, la taille des images secondaire, on concentre l'analyse dans une zone précise de l'objet. Seules les zone de l'objet couvertes par les images secondaires sont analysées.

La figure 3 illustre le fait que l'invention permet d'ajuster localement la zone observée de l'objet en ajustant le nombre, la taille et la position des images secondaires S_{k,p}.

La figure 4 illustre la phase d'apprentissage, et en particulier la formation de lots d'images secondaires pour obtenir in fine un modèle de compression-décompression à facteur de compression par lot.

La figure 4 montre le regroupement des N images secondaires S_{k,p} similaires pour former un lot. Chaque lot est traité séparément et est utilisé pour créer un modèle F_{k,p} de compression-décompression à facteur de compression Q_{k,p}. Ainsi à titre d'exemple et tel qu'illustré figure 3, les N=4 images secondaires S₃,₃ sont utilisées pour créer le modèle F_{3,3} de facteur de compression Q3,3.

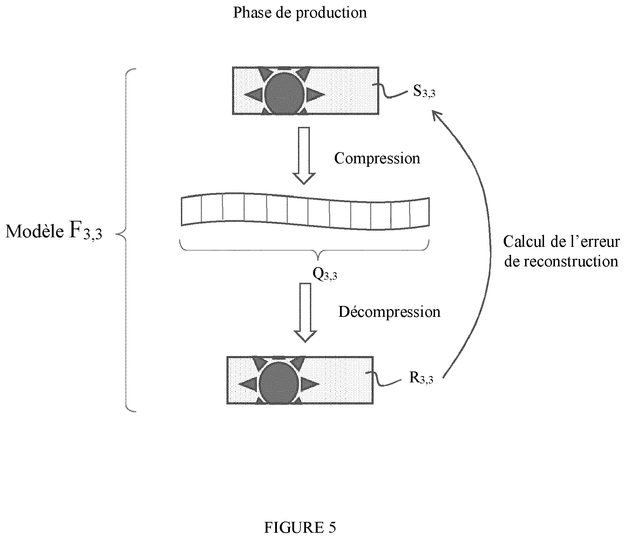

La figure 5 illustre l'utilisation du modèle de compression-décompression découlant de la phase d'apprentissage en phase de production. En phase de production, chaque modèle F_{k,p} déterminé lors de la phase d'apprentissage est utilisé pour calculer l'image reconstruite de chaque image secondaire S_{k,p} de l'objet en cours de d'alimentation dans le bol. Chaque image secondaire de l'objet subit donc une opération de compression-décompression avec un modèle et un facteur de compression différent issus de la phase d'apprentissage. Il résulte de chaque opération de compression-décompression une image reconstruite qui peut être comparée à l'image secondaire dont elle est issue. La comparaison de l'image secondaire S_{k,p} et son image reconstruite R_{k,p} permet de calculer une erreur de reconstruction qui sera utilisée pour définir un score.

La figure 5 illustre, à titre d'exemple illustratif, le cas particulier de l'obtention de l'image reconstruite R3,3 à partir de l'image secondaire S_{3,3} en utilisant le modèle F_{3,3} et son facteur de compression Q3,3.

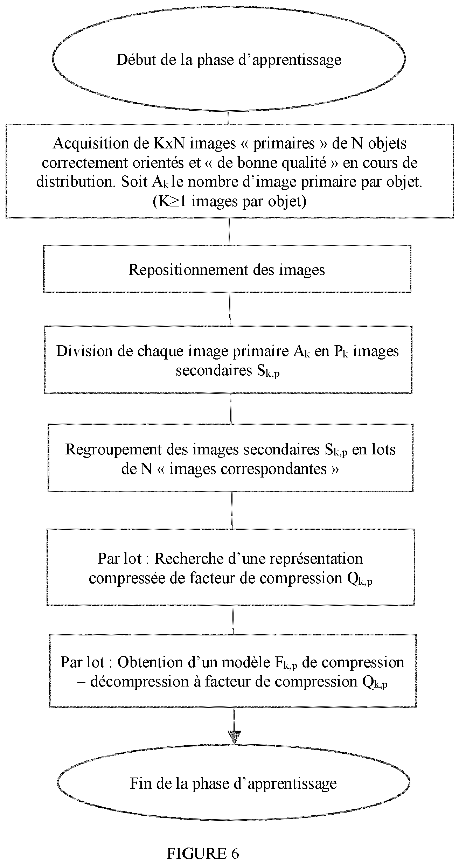

La figure 6 représente les principales étapes de la phase d'apprentissage selon la présente invention. Au début de la phase d'apprentissage, N d'objets jugés correctement orientés et de qualité acceptable sont fournis par le bol. Le jugement qualitatif et/ou quantitatif desdits objets peut être fait selon des procédures de contrôle visuels ou selon des méthodes et moyens définis par l'entreprise. Le nombre d'objets alimentés pour la phase d'apprentissage peut donc être égal à N ou supérieur à N. La phase d'apprentissage illustrée sur la figure 6 comprend au moins les étapes suivantes :
- Acquisition des KxN images dites "primaires" des objets jugés correctement orientés et de bonne qualité pendant la distribution desdits objets. Chaque objet peut être associé à une (K=1) ou plusieurs (K>1) images primaires distinctes selon les dimensions de la zone à analyser sur l'objet et de la taille des défauts que l'on souhaite détecter. Des conditions d'éclairage et de grossissement appropriées au contexte industriel sont mis en oeuvre pour permettre la prise de d'images dans un environnement lumineux relativement constant. Les techniques d'optimisation de l'éclairage connues peuvent être mises en oeuvre pour éviter les phénomènes de reflet ou les perturbations liées à l'environnement. De multiples solutions couramment utilisées peuvent être adoptées comme par exemple des tunnels ou boites noires qui permettent d'éviter les perturbations d'éclairage venant de l'extérieur, ou/et des lumières avec des longueurs d'onde spécifiques et/ou des éclairages en lumière rasante ou en éclairage indirect. Lorsque plusieurs images primaires sont prises sur un même objet (K>1), lesdites images primaires peuvent être espacées, juxtaposées ou encore se chevaucher. Le chevauchement des images primaires peut être utile lorsque l'on souhaite éviter de couper un éventuel défaut qui apparaitrait entre deux images, et/ou pour compenser la perte d'information sur le bord de l'image liée à l'étape de repositionnement des images. On peut également combiner ces façons de faire en fonction des images primaires et de l'information qui s'y trouve. L'image peut également être pré-traitée par l'intermédiaire de filtres optiques ou numériques afin d'augmenter par exemple le contraste.
- Ensuite les images primaires sont repositionnées par rapport à une image de référence. De façon générale, les images primaires de n'importe quel objet alimenté pendant la phase d'apprentissage peuvent servir d'images de référence. De préférence, les images primaires du premier objet alimenté pendant la phase d'apprentissage sont utilisées comme images de référence. Les méthodes de repositionnement de l'image primaire sont détaillées dans la suite de la description de la présente demande.
- Chaque image primaire Ak est ensuite divisée en Pₖ images dites "secondaires". La division de l'image peut résulter en une zone d'analyse plus réduite que l'image primaire. Une réduction de la zone d'analyse peut être intéressante lorsque l'on sait à priori dans quelle zone de l'objet chercher d'éventuels défauts. Les images secondaires peuvent être espacées les unes des autres laissant entre elles des zones "non analysées". Ce cas de figure peut être utilisé par exemple lorsque les défauts apparaissent dans des zones ciblées, ou lorsque les défauts apparaissent de façon répétitive et continue. La réduction de la zone d'analyse permet de réduire les temps de calcul. Alternativement, les images secondaires peuvent se superposer. Le chevauchement des images secondaires permet d'éviter de couper un défaut en deux parties lorsque ledit défaut apparait à la jointure entre deux images secondaires. Le chevauchement des images secondaires est particulièrement utile lorsque des défauts de petite taille sont cherchés. Enfin, les images secondaires peuvent être juxtaposées sans espacement ni chevauchement. La division de l'image primaire peut se faire en images secondaires de tailles identiques ou variables et les façons de positionner relative les images secondaires (espacées, juxtaposées ou superposées) peuvent aussi se combiner en fonction des défauts recherchés.
- L'étape suivante consiste à regrouper les images secondaires correspondantes par lot. Les images secondaires obtenues à partir des KxN images primaires donne lieu à un ensemble d'images secondaires. A partir de cet ensemble d'images secondaires, on peut former des lots contenant N images secondaires correspondantes, à savoir la même image secondaire S_{k,p} de chaque objet. Ainsi, les N images secondaires S_{1,1} sont regroupées dans un lot. Il en est de même pour les N images S_{1,2}, puis pour les N images S_{1,3}, et ainsi de suite pour l'ensemble des images S_{k,p}.
- L'étape suivante consiste à rechercher une représentation compressée par lot d'images secondaires. Cette opération est une étape clé de l'invention. Elle consiste notamment à obtenir un modèle de compression-décompression F_{k,p} à facteur de compression Q_{k,p} qui caractérisent ledit lot. Les modèles F_{k,p} seront utilisés pour le contrôle de qualité des objets pendant la phase de production. Ainsi on obtient le modèle F_{1,1} de critère de compression Q_{1,1} pour le lot des images secondaires S_{1,1}. De même le modèle F_{1,2} est obtenu pour le lot d'images S_{1,2} ; puis le modèle F_{1,3} pour le lot d'images S_{1,3}; et ainsi de suite un modèle F_{k,p} est obtenu pour chaque lot d'images S_{k,p}.
- Le choix du facteur de compression Q_{k,p} par lot d'image secondaire S_{k,p} dépend du temps de calcul à disposition et de la taille du défaut que l'on souhaite détecter.
- A la fin de la phase d'apprentissage, on dispose d'un ensemble de modèles F_{k,p} à facteur de compression Q_{k,p} qui sont associés à l'orientation et à la qualité visuelle de l'objet en cours de production.

Selon l'invention, les résultats de la phase d'apprentissage qui sont les modèles F_{k,p} et les facteurs de compression Q_{k,p} peuvent être conservés comme une "recette" et réutilisés ultérieurement lors d'une nouvelle production des mêmes objets. Des objets de qualité identique peuvent ainsi être reproduits ultérieurement réutilisant la recette prédéfinie. Cela permet d'éviter également de refaire une phase d'apprentissage préalablement au démarrage de chaque production desdits mêmes objets.

Selon l'invention, il est possible d'avoir un apprentissage itératif en cours de production. Ainsi, en cours de production, il est possible par exemple d'effectuer un apprentissage additionnel (ou complémentaire) avec de nouveaux objets et d'ajouter les images de ces objets aux images des objets pris initialement en compte lors de la phase d'apprentissage. A partir du nouvel ensemble des images, une nouvelle phase d'apprentissage peut être effectuée. L'apprentissage évolutif est particulièrement adapté si une différence d'orientation ou une différence esthétique entre les objets apparait en cours de production et que cette différence n'est pas considérée comme un défaut. En d'autres termes, ces objets sont à considérés comme "bons" comme dans la phase d'apprentissage initiale et il est préférable d'en tenir compte. Dans ce cas de figure, un apprentissage itératif est nécessaire afin d'éviter un taux de rejet élevé qui comprendrait les objets présentant cette différence. L'apprentissage itératif peut être réalisé de nombreuses façons, soit par exemple en cumulant les nouvelles images avec les images préalablement apprises; soit en recommençant l'apprentissage avec les nouvelles images apprises; ou soit encore en ne conservant seulement que quelques images initiales avec les nouvelles images.

Selon l'invention, l'apprentissage itératif est déclenché par un indicateur lié au rejet des objets. Cet indicateur est par exemple le nombre de rejet par unité temporelle ou le nombre de rejet par quantité d'objets fournis. Lorsque cet indicateur dépasse une valeur fixée, l'opérateur est alerté et décide si l'augmentation du taux de rejet nécessite :
- une phase d'apprentissage itérative
- un réglage du système d'alimentation
- un rejet du lot d'objet.

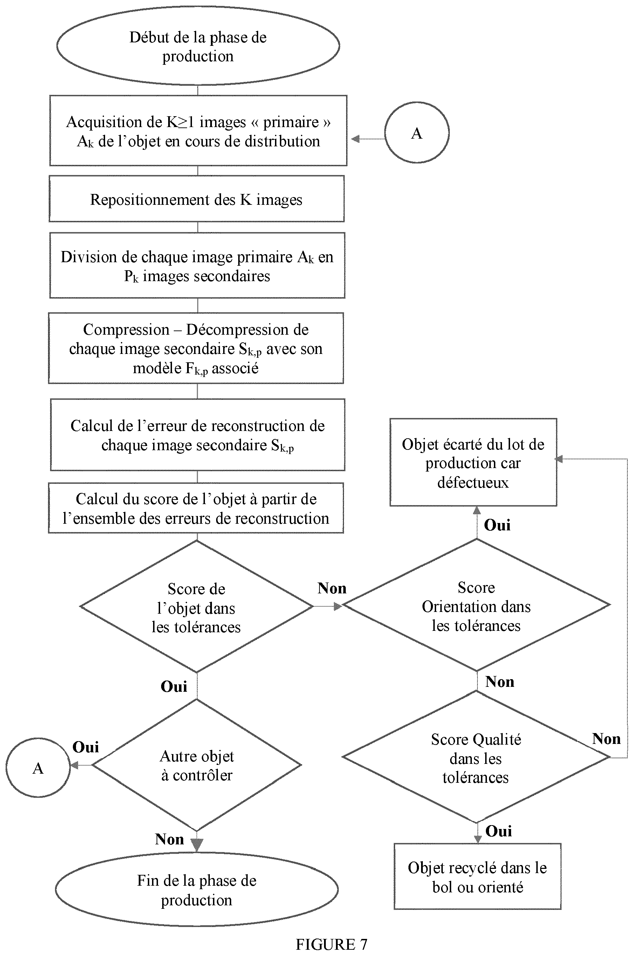

La figure 7 représente les principales étapes de la phase de production des objets. La phase de production commence après la phase d'apprentissage, c'est-à-dire quand les critères caractéristiques des objets "bien" orientés et "de "qualité" acceptable ont été définis comme décrit ci-dessus. L'invention permet de recycler ou d'orienter les objets considérés comme mal orientés et d'écarter en temps réel du lot de production les objets considérés comme défectueux, et d'éviter l'utilisation d'objets considérés comme défectueux lorsqu'une dérive dans la qualité des objets est observée. La phase de production selon l'invention illustrée figure 7 comprend au moins les opérations suivantes :
- Acquisition de K images primaires de l'objet en cours d'alimentation dans le bol. Les images de l'objet sont prises de façon identique aux images prises dans la phase d'apprentissage : les zones photographiées, les conditions d'éclairage, de grossissement et de réglage sont identiques à celles utilisées pendant la phase de d'apprentissage.
- Les K images sont repositionnées par rapport aux images de référence. L'opération de repositionnement a pour but de s'affranchir des décalages entre les images que l'on souhaite comparer. Ces décalages sont liés aux variations de position et d'orientation des objets lors de la prise d'image.
- Chaque image primaire Ak de l'objet en production est ensuite divisée en Pₖ images secondaires. La division est effectuée de la même manière que la division des images réalisée dans la phase d'apprentissage. A l'issue de cette division, on obtient donc un ensemble d'images secondaires S_{k,p} par objet en production.
- Chaque image secondaire S_{k,p} est ensuite compressée-décompressée avec le modèle F_{k,p} à facteur de compression F_{k,p} prédéfini pendant la phase d'apprentissage. Cette opération donne lieu à une image reconstruite R_{k,p} pour chaque image secondaire S_{k,p}. Ainsi pour l'objet en cours de production objet, on obtient des images reconstruites qui peuvent être comparées aux images secondaires dudit objet. Du point de vue numérique, l'usage du terme "reconstruction de l'image secondaire" ne signifie pas forcément l'obtention d'une nouvelle image au sens strict du terme. L'objectif étant de comparer in fine l'image de l'objet en cours de production aux images obtenues lors de la phase d'apprentissage par le biais des fonctions de compression - décompression et des facteurs de compression, seule la quantification de la différence entre ces images étant strictement utile. Pour des raisons de temps de calcul, il peut être choisi de se limiter à un objet numérique représentatif de l'image reconstruite et suffisant pour quantifier la différence entre l'image secondaire et l'image reconstruite. L'utilisation modèle F_{k,p} est particulièrement avantageuse car elle permet d'effectuer cette comparaison dans des temps très réduits compatibles avec les exigences et les cadences de la production.

- A partir de la comparaison de l'image secondaire et l'image secondaire reconstruite, une erreur de reconstruction peut être calculée. La méthode préférentielle pour quantifier cette erreur est le calcul de l'erreur quadratique moyenne mais d'autres méthodes équivalentes sont possibles.
- Pour chaque objet, on dispose donc des images secondaires et des images reconstruites, et par conséquent des erreurs de reconstruction. A partir de cet ensemble d'erreurs de reconstruction, plusieurs scores peuvent être défini pour l'objet en cours de production. Plusieurs méthodes de calcul sont possibles pour calculer les scores de l'objet qui caractérise sa ressemblance ou différence par rapport au lot appris. Ainsi selon l'invention, un objet éloigné visuellement du lot d'apprentissage parce qu'il présente une orientation différente ou des défauts aura un ou plusieurs scores élevés. A contrario, un objet proche visuellement du lot d'apprentissage aura un ou plusieurs scores faibles et sera considéré correctement orienté et de bonne qualité (ou d'une qualité acceptable). Une méthode préférentielle de calcul du ou des scores de l'objet consiste à prendre la valeur maximale des erreurs de reconstruction. D'autres méthodes consistent à combiner les erreurs de reconstructions pour calculer la valeur du ou des scores de l'objet.
- L'étape suivante consiste à recycler ou orienter correctement les objets « mal orientés » ; et à écarter du lot de production les objets défectueux. Si la valeur du ou des scores de l'objet est inférieure à une ou des limites prédéfinies, l'objet évalué répond aux critères d'orientation et de qualité visuels définis lors de la phase d'apprentissage, et l'objet est gardé dans le flux de production. A contrario, si la ou les valeurs du ou des scores de l'objet sont supérieures à ladite ou lesdites limites, soit l'objet est recyclé dans le système d'alimentation (ou orienté) car son orientation sort de la plage acceptable ; soit l'objet est écarté du flux de production car il est défectueux et son recyclage est inutile.

Plusieurs méthodes peuvent être utilisées pour différentier un objet mal orienté d'un objet défectueux :
- Une première méthode consiste à utiliser la valeur du score pour discriminer un objet mal orienté d'un objet défectueux.
- Selon une autre méthode plusieurs scores sont utilisés pour discriminer un objet mal orienté d'un objet défectueux.
- Selon une autre méthode, le repositionnement des images et au moins un score sont utilisés pour discriminer un objet mal orienté d'un objet défectueux.
- Selon une autre méthode, les points d'intérêt et les descripteurs et au moins un score sont utilisés pour discriminer un objet mal orienté d'un objet défectueux.

Les étapes de l'invention sont reprises et présentées de façon plus détaillée ci-dessous.

### Repositionnement de l'image primaire

La méthode de repositionnement de l'image selon l'invention comporte deux étapes :
- La recherche dans l'image de points d'intérêt et de descripteurs
- Le repositionnement de l'image prise par rapport à l'image de référence à partir des points d'intérêts et des descripteurs et la déduction de l'orientation de l'objet

Typiquement, l'image ou les images de référence est/sont définie(s) sur la première image prise lors de la phase d'apprentissage ou autre image, comme décrit dans la présente demande. La première étape consiste à définir sur l'image des points d'intérêts et des descripteurs associés aux points d'intérêt. Les points d'intérêt peuvent être par exemple des parties angulaires au niveau des formes présentes sur l'image, ils peuvent être encore des zones à fort contraste d'intensité ou de couleur ou encore les points d'intérêt peuvent être choisis aléatoirement. Les points d'intérêts identifiés sont ensuite caractérisés par des descripteurs qui définissent les caractéristiques de ces points d'intérêt.

De préférence les points d'intérêt sont déterminés de façon automatique grâce à un algorithme approprié; mais une méthode alternative consiste à prédéfinir arbitrairement la position des points d'intérêt.

Le nombre de points d'intérêt utilisé pour le repositionnement est variable et dépend du nombre de pixel par point d'intérêt. Le nombre total de pixel utilisé pour le positionnement est généralement compris entre 100 et 10'000 et de préférence entre 500 et 1000.

Une première méthode pour définir les points d'intérêt consiste à choisir ces points de manière aléatoire. Cela revient à définir aléatoirement un pourcentage de pixels appelés points d'intérêt, les descripteurs étant les caractéristiques desdits pixels (position, couleurs). Cette première méthode est particulièrement adaptée au contexte de production industrielle, surtout dans le cas des procédés de fabrication à grande cadence ou le temps disponible pour le calcul est très réduit.

Selon un premier mode de réalisation de la première méthode, les points d'intérêt sont répartis de manière aléatoire dans l'image.

Selon un second mode de réalisation de la première méthode, les points d'intérêt sont répartis aléatoirement dans une zone prédéfinie de l'image. Ce second mode est avantageux quand on sait à priori ou vont apparaitre les éventuels défauts.

Une seconde méthode pour définir les points d'intérêt est basée sur la méthode nommée "SIFT" ("Scale Invariant Feature Transform", voir la publication US 6,711,293) soit une méthode qui permet de conserver les mêmes caractéristiques visuelles de l'image indépendamment de l'échelle. Cette méthode consiste à calculer les descripteurs de l'image aux points d'intérêt de ladite image. Ces descripteurs correspondent à des informations numériques dérivées de l'analyse locale de l'image et qui caractérisent le contenu visuel de l'image indépendamment de l'échelle. Le principe de cette méthode consiste à détecter sur l'image des zones définies autour de points d'intérêt ; lesdites zones étant de préférence circulaires avec un rayon appelé facteur d'échelle. Dans chacune de ces zones, on cherche les formes et leurs contours, puis on définit les orientions locales des contours. Numériquement ces orientations locales se traduisent par un vecteur qui constitue le descripteur "SIFT" du point d'intérêt.

Une troisième méthode pour définir les points d'intérêt est basée sur la méthode "SURF" ("Speeded Up Robust Features", voir la publication US 2009/0238460) soit une méthode accélérée pour définir les points d'intérêt et les descripteurs. Cette méthode est similaire à la méthode "SIFT" mais présente l'avantage de la rapidité d'exécution. Cette méthode comporte comme "SIFT" une étape d'extraction des points d'intérêt et de calcul des descripteurs. La méthode "SURF" utilise le Fast-Hessian pour la détection des points d'intérêt et une approximation des ondelettes de Haar pour calculer les descripteurs.

Une quatrième méthode pour rechercher les points d'intérêt basée sur la méthode "FAST" (Features from Accelerated Segment Test) consiste à identifier les points d'intérêt potentiels puis analyser l'intensité des pixels situés autour desdits points d'intérêt. Cette méthode permet d'identifier les points d'intérêt très rapidement. Les descripteurs peuvent être identifiés via la méthode "BRIEF" (Binary Robust Independant Elementary Features).

La deuxième étape de la méthode de repositionnement de l'image consiste à comparer l'image primaire à l'image de référence en utilisant les points d'intérêt et leurs descripteurs. L'obtention du meilleur repositionnement est obtenue par recherche du meilleur alignement entre les descripteurs des deux images.

Selon les cas de figure, l'image peut nécessiter un repositionnement selon un seul axe, selon deux axes perpendiculaires ou encore un repositionnement en rotation autour de l'axe perpendiculaire au plan formé par l'image.

Le repositionnement de l'image peut résulter de la combinaison de mouvements de translation et de rotation. La transformation homographique optimale est recherchée via la méthode des moindres carrés.

Pour l'opération de repositionnement de l'image on utilise les points d'intérêts et les descripteurs. Ces descripteurs peuvent être par exemple les caractéristiques des pixels ou les descripteurs "SIFT", "SURF", , "BRIEF" à titre d'exemple. Les points d'intérêt et les descripteurs sont utilisés comme points de repère pour repositionner l'image.

Le repositionnement dans les méthodes SIFT, SURF et BRIEF se fait par la comparaison des descripteurs. Les descripteurs qui ne sont pas pertinents sont écartés en utilisant une méthode de consensus comme par exemple la méthode Ransac. Ensuite, la transformation homographique optimale est recherchée via la méthode des moindres carrés.

### Division de l'image primaire en images secondaires

La division de l'image primaire en P images secondaires peut être faite de plusieurs façons.

Un intérêt de l'invention est de permettre d'ajuster le niveau d'analyse visuelle à la zone observée de l'objet. Cet ajustement se fait dans un premier temps par le nombre d'image primaire et le niveau de résolution de chaque image primaire. La décomposition en images secondaires permet ensuite d'ajuster le niveau d'analyse localement dans chaque image primaire. Un premier paramètre sur lequel on peut intervenir, c'est la taille des images secondaires. Une image secondaire de plus petite taille permet d'affiner localement l'analyse. En ajustant conjointement la taille de chaque image secondaire S_{k,p} et le facteur de compression Q_{k,p}, l'invention permet d'optimiser le temps de calcul tout en gardant un niveau de détection performant et ajusté au niveau d'exigence liée à l'objet délivré. L'invention permet d'adapter localement le niveau de détection au niveau de criticité de la zone observée.

Un cas particulier de l'invention consiste à avoir toutes les images secondaires de taille identique.

Ainsi, quand toute la zone observée est de même importance, une première méthode consiste à diviser l'image primaire en P images secondaires de taille identique juxtaposées sans recouvrement.

Une deuxième méthode consiste à diviser l'image primaire en P images secondaires de taille identiques juxtaposées avec recouvrement. Le recouvrement est ajusté en fonction de la dimension des défauts susceptibles d'apparaitre sur l'objet.

Plus le défaut est de petite taille, plus le recouvrement peut être diminué. En général. On considère que le recouvrement est au moins égal à la demi-longueur caractéristique du défaut ; la longueur caractéristique étant définie comme le plus petit diamètre du cercle qui permet de contenir le défaut dans son intégralité.

Bien entendu, il est possible de combiner ces méthodes et utiliser des images secondaires qui sont juxtaposées et/ou avec recouvrement et/ou à une certaine distance les unes des autres.

### Calcul des Fonctions de compression-décompression

Selon une première méthode qui est aussi la méthode préférentielle, les fonctions de compression - décompression et les facteurs de compression sont déterminés à partir d'une analyse en composantes principales ("PCA" ou "Principal Component Analysis"). Cette méthode permet de définir les vecteurs et valeurs propres qui caractérisent le lot issu de la phase d'apprentissage. Dans la nouvelle base, les vecteurs propres sont classés par ordre d'importance. Le facteur de compression découle du nombre de dimension que l'on retient dans la nouvelle base. Plus le facteur de compression est élevé, plus le nombre de dimension de la nouvelle base est réduit. L'invention permet d'ajuster le facteur de compression en fonction du niveau de contrôle souhaité et en fonction du temps de calcul à disposition.

Un premier avantage de cette méthode, est lié au fait que la machine n'a pas besoin d'indication pour définir la nouvelle base. Le choix des vecteurs propres se fait automatiquement par calcul.

Un deuxième avantage de cette méthode est lié à la réduction du temps de calcul pour détecter les défauts en phase de production. Le nombre de données à traiter est diminué car le nombre de dimensions est réduit.

Un troisième avantage de la méthode résulte dans la possibilité d'attribuer un ou plusieurs scores en temps réel à l'image de l'objet en cours de production. Le ou les scores obtenus permet de quantifier un taux de déviation/erreur de l'objet en cours d'alimentation dans le bol par rapport aux objets de la phase d'apprentissage par le biais de sa reconstruction avec les modèles issus de la phase d'apprentissage.

Le facteur de compression est compris entre 5 et 500'000; et de préférence entre 100 et 10'000. Plus le facteur de compression est élevé, plus le temps de calcul sera court en phase de production pour analyser l'image. Cependant un facteur de compression trop élevé peut conduire à un modèle trop grossier et in fine inadapté pour détecter les erreurs.

Selon une deuxième méthode, le modèle est un auto-encodeur. L'auto-encodeur se présente sous la forme d'un réseau de neurone qui permet de définir les caractéristiques de façon non supervisée. L'auto-encodeur se compose de deux parties : un encodeur et un décodeur. L'encodeur permet de comprimer l'image secondaire S_{k,p}, et le décodeur permet d'obtenir l'image reconstruite R_{k,p}.

Selon la deuxième méthode on dispose d'un auto-encodeur par lot d'images secondaires. Chaque auto-encodeur a son propre facteur de compression.

Selon la deuxième méthode, les auto-encodeurs sont optimisés pendant la phase d'apprentissage. L'optimisation de l'auto-encodeur est obtenue en comparant les images reconstruites et les images initiales. Cette comparaison permet de quantifier les différences entre les images initiales et les images reconstruites et par conséquent de déterminer l'erreur commise par l'encodeur. La phase d'apprentissage permet d'optimiser l'auto-encodeur en minimisant l'erreur de reconstruction des images.

Selon une troisième méthode le modèle est basé sur l'algorithme "OMP" ou "Orthogonal Matching Pursuit". Cette méthode consiste à chercher la meilleure combinaison linéaire à partir de la projection orthogonale de quelques images sélectionnées dans une bibliothèque. Le modèle est obtenu par méthode itérative. A chaque ajout d'une image de la bibliothèque, l'image recomposée est améliorée.

Selon la troisième méthode, la bibliothèque d'image est définie par la phase d'apprentissage. Cette bibliothèque est obtenue par la sélection de quelques images représentatives de l'ensemble des images de la phase d'apprentissage.

### Calcul de l'image reconstruite à partir du modèle de compression décompression

En phase de production, chaque image primaire Ak de l'objet contrôlé est repositionnée en faisant appel aux procédés décrits ci-dessus puis divisée en Pₖ images secondaires S_{k,p}. Chaque image secondaire S_{k,p} fait l'objet d'une opération numérique de reconstruction avec son modèle défini lors de la phase d'apprentissage. A la fin de l'opération de reconstruction on dispose donc d'une image reconstruite R_{k,p} par image secondaire S_{k,p}.

L'opération de reconstruction de chaque image secondaire S_{k,p} avec un modèle F_{k,p} à facteur de compression Q_{k,p} permet d'avoir des temps de calcul très réduits. Le facteur de compression Q_{k,p} est compris entre 5 et 500'000 et préférablement entre 10 et 10'000.

Selon la méthode PCA qui est aussi la méthode préférentielle l'image secondaire S_{k,p} est préalablement transformée en vecteur. Ensuite, ce vecteur est projeté dans la base de vecteur propres grâce à la fonction F_{k,p} définie lors de l'apprentissage.

On obtient alors l'image reconstruite R_{k,p} en transformant le vecteur obtenu en image

Selon la deuxième méthode, la recomposition de l'image secondaire est faite par l'auto-encodeur dont les paramètres ont été définis dans la phase d'apprentissage. L'image secondaire S_{k,p} est traitée par l'auto-encodeur afin d'obtenir l'image reconstruite R_{k,p}.

Selon la troisième méthode, l'image secondaire est reconstruite avec l'algorithme OMP ou Othogonal Matching Pursuit dont les paramètres ont été définis pendant la phase d'apprentissage.

### Calcul de l'erreur de reconstruction de chaque image secondaire

L'erreur de reconstruction est issue de la comparaison entre l'image secondaire S_{k,p} et l'image reconstruite R_{k,p}.

Une méthode utilisée pour calculer l'erreur consiste à mesurer la distance entre l'image secondaire S_{k,p} et l'image reconstruite R_{k,p}. La méthode préférentielle utilisée pour calculer l'erreur de reconstruction est la distance euclidienne ou norme 2. Cette méthode considère la racine carrée de la somme des carrés des erreurs.

Une méthode alternative pour calculer l'erreur consiste à utiliser la distance de Minkowsky la p-distance qui est une généralisation de la distance euclidienne. Cette méthode considère la racine p^{ème} de la somme des valeurs absolue des erreurs à la puissance p. Cette méthode permet d'accorder plus de poids aux écarts importants en choisissant p plus élevé que 2.

Une autre méthode alternative est la norme 3 ou méthode de Tchebichev. Cette méthode considère la valeur absolue maximale des erreurs.

### Calcul du ou des scores

La valeur du ou des scores de l'objet est obtenue à partir de l'erreur de reconstruction de chaque image secondaire.

Une méthode préférentielle consiste à attribuer au score la valeur maximale des erreurs de reconstruction.

Une méthode alternative consiste à calculer la valeur du score en faisant la moyenne des erreurs de reconstructions.

Une autre méthode alternative consiste à faire une moyenne pondérée des erreurs de reconstruction. La moyenne pondérée peut être utile lorsque la criticité des défauts n'est pas identique dans toutes les zones de l'objet.

Une autre méthode consiste à utiliser la distance euclidienne ou la norme 2.

Une autre méthode consiste à utiliser la p-distance.

Une autre méthode consiste à utiliser la distance de Tchebichev ou norme 3.

D'autres méthodes équivalentes sont bien entendu possibles dans le cadre de la présente invention.

Une fois que le ou les scores ont été calculés, leurs valeurs sont utilisées pour déterminer si l'objet considéré remplit les conditions d'orientation et de qualité souhaitées ou non. Si c'est le cas, il est maintenu dans le flux d'alimentation. Si le score ne répond pas aux conditions parce que l'orientation de l'objet sort de la plage acceptable, l'objet est recyclé dans le système d'alimentation ou réorienté. Si le score ne répond pas aux conditions parce que l'objet est défectueux, l'objet est retiré du processus d'alimentation.

La distinction d'un objet mal orienté d'un objet défectueux peut être réalisée à partir de la valeur du score. Ainsi par exemple, pour un bouchon mal orienté (à l'envers), le score varie entre 7 et 10, tandis que des défauts sur le bouchon génèrent un score compris entre 3 et 5. Ainsi les bouchons à l'envers peuvent être facilement distingués des bouchons défectueux.

Dans d'autre cas, il est proposé d'utiliser plusieurs scores pour discriminer les objets défectueux des objets mal orientés. Notamment, l'invention permet de définir un score pour une zone locale et décentrée de l'objet. Considérons par exemple un objet présentant un orifice décentré. L'image locale de l'orifice permet d'obtenir un score lié à l'orientation de l'objet. Ainsi, la combinaison du score de l'orifice avec d'autres score permet de séparer les objets mal orientés des objets défectueux.

Selon une méthode alternative, on utilise les informations de repositionnement des images et le ou les scores pour discriminer un objet mal orienté d'un objet défectueux.

Selon une autre méthode, on utilise les points d'intérêt et les descripteurs et au moins un score pour discriminer un objet mal orienté d'un objet défectueux.

L'objet mal orienté est préférablement recyclé dans le bol. Une première méthode consiste à souffler le composant dans le bol par l'intermédiaire d'au moins un jet d'air situé sur la trajectoire de l'objet. Une méthode alternative consiste à expulser mécaniquement le composant dans le bol par l'intermédiaire d'un vérin. Le système de recyclage de l'objet par jet d'air ou par actionnement mécanique.

Dans d'autres modes d'exécution, l'orientation de l'objet mal orienté est corrigée avant que l'objet sorte du bol ou après sa sortie. De nombreux systèmes d'orientation d'objet peuvent être envisagés et associés à l'invention. Ces systèmes peuvent comporter un ou plusieurs axes en fonction de la complexité du mouvement d'orientation à réaliser. Le système d'orientation est par exemple un robot.

Dans la présente demande, il faut bien entendu comprendre que le procédé est mis en oeuvre dans un système d'alimentation (comme un bol vibrant ou un bol centrifuge) qui peut avoir une cadence élevée (p.ex. d'au moins 100 produits à la min). Si dans des exemples, le singulier a été utilisé pour définir un objet en production, cela a été fait pour des raisons de simplicité. En fait, le procédé s'applique à des objets successifs dans une alimentation en production: le procédé est donc itératif et répétitif sur chaque objet successif de l'alimentation et le contrôle de l'orientation et de la qualité s'effectue sur tous lesdits objets successifs.

Les modes d'exécution décrits le sont à titre d'exemples illustratifs et ne doivent pas être considérés comme limitatifs. D'autres modes d'exécution peuvent faire appel à des moyens équivalents à ceux décrits par exemple. Les modes d'exécution peuvent également être combinés entre eux en fonction des circonstances, ou des moyens et/ou les étapes de procédé utilisés dans un mode d'exécution peuvent être utilisés dans un autre mode d'exécution de l'invention.

## Revendications

1. Procédé d'alimentation au moyen d'un bol d'alimentation, comme un bol vibrant ou centrifuge, d'objets orientés, comme par exemple des composants d'emballage tels que des têtes de tubes ou des bouchons, ledit procédé comprenant au moins un contrôle d'orientation et de qualité intégré dans le procédé d'alimentation effectué en cours de production et en continu,
ledit contrôle étant basé sur des images des objets prises en cours d'alimentation et utilisant des algorithmes d'intelligence artificielle,
ledit contrôle comprenant une phase d'apprentissage permettant de définir des tolérances acceptables d'orientation et de qualité des objets, et une phase de production pendant laquelle seuls les objets dont l'orientation et la qualité respectent lesdites tolérances acceptables sont alimentés.

2. Procédé selon la revendication 1, dans lequel
ladite phase d'apprentissage comprend au moins les étapes suivantes:
- ) production de N objets considérés comme ayant une orientation et une qualité de tolérances acceptables;
- ) prise d'au moins une image primaire (Aₖ) de référence de chacun des N objets;
- ) division de chaque image primaire (Aₖ) de référence en (Pₖ) images secondaires (S_{k,p}) de référence;
- ) regroupement des images secondaires de référence correspondantes en lots de N images;
- ) détermination d'un modèle (F_{k,p}) de compression - décompression et avec un facteur de compression (Q_{k,p}) par lot
et ladite phase de production comprend au moins les étapes suivantes:
- ) prise d'au moins une image primaire d'au moins un objet en production;
- ) division de chaque image primaire en images secondaires (S_{k,p});
- ) application du modèle de compression - décompression et du facteur de compression définis lors de la phase d'apprentissage à chaque image secondaire (S_{k,p}) pour former une image secondaire reconstruite (R_{k,p});
- ) calcul de l'erreur de reconstruction de chaque image secondaire reconstruite R_{k,p};
- ) attribution d'un ou plusieurs scores par objet sur la base des erreurs de reconstruction;
- ) détermination si l'objet en cours d'alimentation passe avec succès le contrôle de son orientation et de sa qualité ou non sur la base du ou des scores attribués.

3. Procédé selon la revendication 1 ou 2, dans lequel si l'objet est considéré comme mal orienté, ledit objet est orienté pour entrer dans les tolérances acceptables ou recyclé dans un bol d'alimentation.

4. Procédé selon l'une des revendications précédentes, dans lequel si l'objet est considéré comme défectueux, ledit objet est écarté du lot de production.

5. Procédé selon l'une des revendications précédentes, dans lequel la valeur du score est utilisée pour discriminer un objet mal orienté d'un objet défectueux.

6. Procédé selon l'une des revendications précédentes, dans lequel plusieurs scores sont utilisés pour discriminer un objet mal orienté d'un objet défectueux.

7. Procédé selon l'une des revendications précédentes, dans lequel on effectue une analyse multiple sur une au moins des images primaires initialement prises, ladite analyse multiple donnant lieu à des images primaires "filles" qui sont utilisées à la place de l'image initialement prise à leur origine.

8. Procédé selon l'une des revendications précédentes, dans lequel après l'étape de prise d'au moins une image primaire, on effectue un repositionnement de chaque image primaire.

9. Procédé selon l'une des revendications précédentes, dans lequel chaque image primaire est traitée et le traitement utilise un filtre, et/ou la détection de contours, et/ou l'application de masques pour cacher certaines zones de l'image.

10. Procédé selon l'une des revendications précédentes, dans lequel le score correspond à la valeur maximale des erreurs de reconstruction et/ou à la moyenne des erreurs de reconstruction et/ou à la moyenne pondérée des erreurs de reconstruction et/ou à la distance euclidienne et/ou la p-distance et/ou la distance de Tchebichev.

11. Procédé selon l'une des revendications précédentes, dans lequel on prend au moins deux images primaires, les images primaires étant de taille identique ou de taille différente.

12. Procédé selon l'une des revendications précédentes, dans lequel la division de chaque image primaire se fait en P images secondaires S de taille identique ou de taille différente, les images secondaires S étant juxtaposées avec recouvrement et/ou sans recouvrement.

13. Procédé selon l'une des revendications précédentes, dans lequel la phase d'apprentissage est itérative et répétée pendant la production avec des objets en cours d'alimentation afin de tenir compte d'une différence qui est considérée comme un défaut d'orientation ou de qualité acceptable.

14. Procédé selon l'une des revendications précédentes, dans lequel le repositionnement consiste à considérer un nombre prédéterminé de points d'intérêt et de descripteurs répartis sur l'image et à déterminer le déplacement relatif entre l'image de référence et l'image primaire qui minimise l'erreur de superposition au niveau des points d'intérêt et les points d'intérêt sont répartis de manière aléatoire dans l'image ou dans une zone prédéfinie de l'image, la position des points d'intérêt est prédéfinie, arbitrairement ou non.

15. Procédé selon la revendication 14, dans lequel l'image est repositionnée selon au moins un axe et/ou l'image est repositionnée en rotation autour de l'axe perpendiculaire au plan formé par l'image et/ou l'image est repositionnée par la combinaison d'un mouvement de translation et de rotation.

16. Procédé selon l'une des revendications précédentes, dans lequel le repositionnement des images et au moins un score sont utilisés pour discriminer un objet mal orienté d'un objet défectueux ou les points d'intérêt et les descripteurs et au moins un score sont utilisés pour discriminer un objet mal orienté d'un objet défectueux.
